# FASCICULE DE BREVET EUROPEEN

(11) **EP 0 779 590 B1**
(45) Date de publication et mention de la délivrance du brevet: **29.08.2001**
(21) Numéro de dépôt: 96119850.4
(22) Date de dépôt: 11.12.1996
(51) Int. Cl.: G06K 7/10, G06K 17/00

(54) **Procédé de gestion d'accès concurrents et dipositif pour sa mise en ouvre**
Verfahren zur Verwaltung gleichzeitiger Zugriffe und Gerät zur Durchführung dieses Verfahrens
Method for managing concurrent accesses and device for carrying out the process

(30) Priorité: 13.12.1995 CH 352295
(43) Date de publication de la demande: 18.06.1997
(73) Titulaire: Bauer, Eric, CH-2006 Neuchatel (CH)
(72) Inventeur: Lebet, Jean-Philippe, 2206 Les Genevreys-sur-Coffrane (CH)
(74) Mandataire: Micheli & Cie

(56) Documents cités:
- EP-A- 0 161 779
- EP-A- 0 229 631
- EP-A- 0 322 701
- EP-A- 0 553 905
- EP-A- 0 577 328
- EP-A- 0 600 374

## Description

La présente invention concerne un procédé de gestion d'accès concurrents ainsi qu'un système pour sa mise en oeuvre. De nombreuses applications comme le contrôle d'accès de personnes à des locaux ou à des installations, le contrôle de processus automatisés le long d'une chaîne de fabrication, ou le comptage de produits utilisent des dispositifs électroniques connus sous le nom de cartes à puces sans contact, de 'tags' ou de 'transponder'. Ces dispositifs, dépourvus de source d'énergie interne, comprennent généralement au moins un circuit d'interface couplé à une antenne et une mémoire programmable. Ils peuvent en outre comporter un micro-processeur et/ou d'autres circuits électroniques aptes à traiter et à transmettre les informations contenues dans leur mémoire. Ils sont portés par leur détenteur ou par l'objet à contrôler et servent selon les cas, de clé d'accès à une installation, de mémoire à accès automatique permettant la restitution ou la modification de données préenregistrées, de mémoire de données variables, telles que des unités tarifaires pour des droits prépayés ou encore d'étiquettes électroniques pour le contrôle de processus. Ces dispositifs esclaves sont destinés à être utilisés avec un dispositif électronique maître (émetteur/lecteur) comprenant les composants électroniques nécessaires à la génération, à la mise en forme et à l'émission d'une porteuse modulée portant un signal codé.

Lorsqu'un dispositif esclave est situé dans le champ alternatif radiant émis par un dispositif maître, son antenne peut extraire du champ alternatif (porteuse) l'énergie nécessaire à l'alimentation temporaire de ses circuits électroniques. Ces circuits tentent alors d'établir un dialogue avec le dispositif maître selon un protocole préétabli. Un des problèmes principaux inhérents à cette technologie concerne la gestion des accès concurrents, c'est-à-dire l'entrée successive ou la présence simultanée de plusieurs dispositifs esclaves dans le champ d'action du dispositif maître. En effet, dès leur activation, les dispositifs esclaves vont tenter de communiquer simultanément avec le dispositif maître qui ne peut déterminer de quel dispositif esclave proviennent les informations émises. Pour résoudre ce problème on s'assure qu'il ne puisse se trouver qu'un seul dispositif esclave à la fois dans le champ d'action du dispositif maître, ceci par toutes sortes de moyens consistant à canaliser et à sérier le flux des personnes et/ou des objets porteurs de dispositif esclave; en particulier par des tourniquets limitant l'accès à une seule personne à proximité du dispositif maître ou par un système de transport de pièces programmées pour ne faire passer qu'une pièce à la fois devant le dispositif maître. Cette solution présente de multiples inconvénients comme la limitation du débit ou les coûts inhérents à la réalisation des moyens de contrôle.

D'autres techniques basées sur un numéro de série unique inscrit de façon permanente dans le dispositif esclave permettent de gérer les accès concurrents. Après transmission de ce numéro de série, le dispositif maître a le moyen d'identifier le dispositif esclave auquel il veut transmettre une commande. Néanmoins, ceci nécessite la transmission de ce numéro de série à chaque dialogue. Pour garantir l'unicité de ce numéro de série, il est nécessaire de le coder sur un grand nombre de bits par exemple 24 ou 32 bits. La transmission de cet identificateur peut s'avérer coûteuse en énergie, ce qui représente un inconvénient majeur, particulièrement dans les dispositifs esclaves dépourvus de source d'énergie interne. De plus, les procédés de fabrication des dispositifs esclaves munis d'un numéro de série unique sont plus compliqués et plus coûteux à mettre en oeuvre.

La demande européenne publiée sous le numéro EP-A-0 553 905 décrit un procédé de communication entre un dispositif maître et plusieurs dispositifs esclaves selon le principe énoncé ci-dessus. Chaque dispositif esclave comporte un numéro d'identification unique qui est utilisé lors du dialogue d'initiation avec le dispositif maître. Pour économiser de l'énergie, une fois qu'un dispositif esclave est identifié, le dispositif maître assigne un numéro plus court pour la suite du dialogue. Pour gérer les accès concurrents, le dispositif maître émet une commande de collision lorsqu'il détermine que plusieurs dispositifs esclaves émettent simultanément. Cette commande de collision comprend un nombre aléatoire qui est interprété par le dispositif esclave comme un délai durant lequel il doit cesser d'émettre avant de reprendre le dialogue. Ce procédé de détection de collision classique n'offre pas de bonnes performances en présence d'un nombre élevé de dispositifs esclaves.

La demande de brevet européenne publiée sous le numéro EP-A-0 322 701 décrit également une méthode de gestion des accès concurrents par une détection de collision dans laquelle chaque dispositif esclave monitore la sortie de son démodulateur pour s'assurer qu'il est seul dans le champ du lecteur. Si tel est le cas, il envoie une commande d'initialisation au lecteur qui lui attribue un numéro d'identification séquentiel. Lors de l'arrivée d'un nouveau dispositif esclave dans le champ radiant du lecteur, le dispositif esclave doit tout d'abord attendre qu'il n'y ait pas de communication entre le lecteur et les autres dispositifs esclaves présents avant d'émettre sa commande d'initialisation pour signaler sa présence au lecteur. Le lecteur doit ensuite émettre une succession de commande pour modifier le numéro d'identification du nouvel arrivant puisque tous les dispositifs esclaves ont le même numéro d'identification lors de leur arrivée. Il en découle une succession d'échange de données coûteuses en temps et en énergie.

D'autre pari, pour garantir une portée utile acceptable à de tels systèmes, il est nécessaire que les dispositifs esclaves disposent de suffisamment d'énergie pour fonctionner correctement, c'est-à-dire d'alimenter leurs circuits électroniques et de permettre l'extraction aisée d'un signal d'horloge. L'énergie qui peut être extraite du champ radiant émis par le dispositif maître au niveau de l'antenne du dispositif esclave dépend entre autres du temps pendant lequel le signal émis a l'amplitude nominale. Les codages connus ne permettent d'extraire d'énergie qu'environ durant la moitié du temps nécessaire à la transmission d'un bit. Ceci a pour conséquence de limiter la portée utile du système.

Le but de la présente invention est de remédier aux inconvénients mentionnés ci-dessus et de permettre l'arrivée et/ou la présence d'un nombre déterminé de dispositifs esclaves dans le champ d'action d'un dispositif maître et de garantir une transmission fiable et redondante entre l'émetteur/lecteur et chaque dispositif esclave présent. Ce but est atteint grâce à un procédé de gestion des accès concurrents et un système pour sa mise en oeuvre qui se distinguent par les caractéristiques énumérées aux revendications 1 et 5.

L'avantage principal d'un tel procédé, dans le cas du contrôle d'accès de personne à une installation par exemple, est de pouvoir augmenter le débit de passage tout en faisant l'économie de dispositifs physiques tels que des tourniquets ou autres moyens de canaliser le flux de personne pour s'assurer qu'une seule personne à la fois se trouve dans le champ du dispositif de lecture.

D'autres avantages ressortent des caractéristiques énumérées dans les revendications dépendantes et de la description. On citera en particulier la redondance modulable du système offrant une fiabilité que l'on peut déterminer en fonction du genre d'application et un codage approprié des informations à transmettre qui permet d'augmenter l'énergie à disposition des dispositifs esclaves.

Concernant le dispositif pour la mise en oeuvre du procédé, les avantages sont une plus grande fiabilité au niveau de la transmission qui permet de ce fait d'augmenter la sécurité et une forme d'exécution modulaire qui diminue les coûts de fabrication de tels dispositifs.

Le dessin annexé illustre à titre d'exemple la structure de la trame de codage des informations ainsi qu'un schéma de principe du dispositif pour la mise en oeuvre du procédé.

La figure 1 est une vue schématique du dispositif maître et de plusieurs dispositifs esclaves intégrés chacun dans un support portable représenté ici sous la forme d'une carte sans contact.

La figure 2 est un schéma de la structure de la trame de codage des informations.

La figure 3 est un schéma du bloc d'entête de la trame illustrée à la figure 1.

La figure 4 est un schéma du bloc de commande de la trame illustrée à la figure 1.

La figure 5 illustre le codage des signaux utilisés pour la transmission des informations.

La figure 6 est un schéma de principe d'un dispositif esclave.

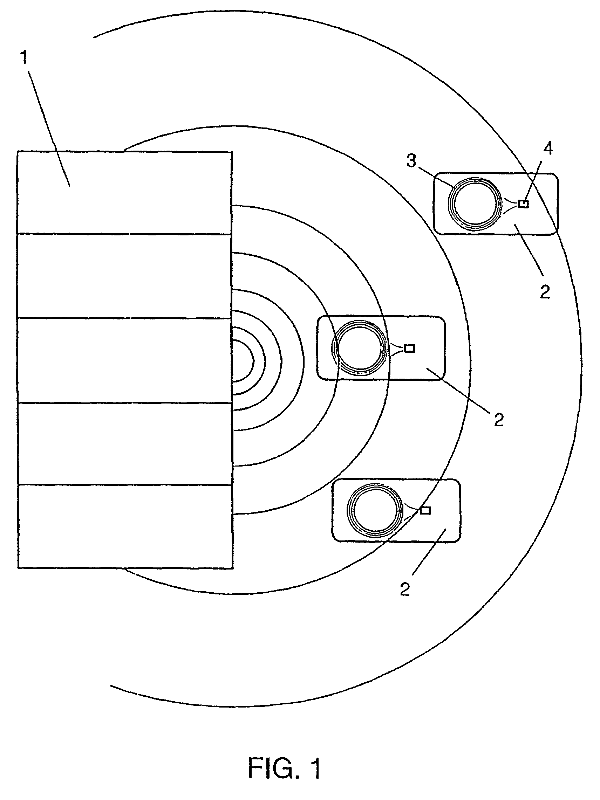

En référence à la figure 1, le procédé objet de la présente invention va maintenant être décrit au niveau du flux d'informations transitant entre, d'une part, un dispositif maître 1 lecteur/émetteur comportant les composants électroniques connus nécessaires à la génération, à la mise en forme et à l'émission d'une porteuse modulée portant un signal codé, et, d'autre part, un ou plusieurs dispositifs esclaves récepteur/transmetteur 2 représentés sous la forme de carte sans contact comportant une antenne 3 reliée à un micro-circuit intégré à mémoire programmable 4. On notera que les dispositifs esclaves 2 sont dépourvus de source d'énergie interne et ne deviennent en conséquence 'actif' que lorsqu'ils sont situés dans le rayon d'action du champ électromagnétique radiant (représenté par des cercles concentriques) émis par le dispositif maître 1 et que l'énergie induite dans l'antenne 3 est suffisante pour activer le micro-circuit 4.

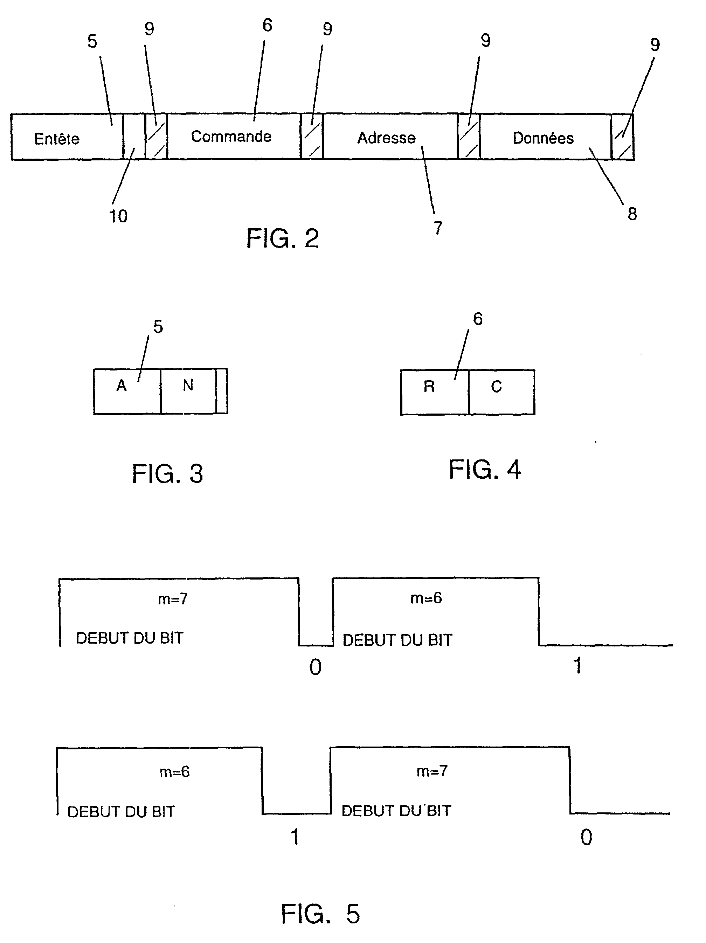

La figure 2 illustre de façon schématique la trame de codage des informations. Cette trame est une succession de bits de longueur définie avec ou sans rupture de séquence pour la reprise de la synchronisation et représente le format normalisé des commandes émises par le dispositif maître. Cette trame se subdivise en quatre blocs 5,6,7,8 portant les informations et en cinq éléments 9,10 intermédiaires. Chacun des blocs 5,6,7,8 a une longueur de 8 à 16 bit. Le premier bloc 5 est un bloc d'entête qui est toujours émis par le dispositif maître 1, même en l'absence de dispositifs esclaves 2 dans son champ d'action. Le deuxième bloc 6 comporte le code de la commande émise ainsi qu'un facteur de redondance. Le troisième bloc 7 contient une adresse et le quatrième bloc 8 contient des données. En mode d'exploitation, l'émission par le dispositif maître, des blocs de commande 6, d'adresses 7 et de données 8 est facultative et dépend de l'action que l'on désire déclencher par la commande dans les dispositifs esclaves 2. Les éléments intermédiaires 9 contiennent les bits de contrôle de la transmission tels que des bits de parité pour assurer une transmission fiable des blocs 5,6,7,8. L'élément 10 correspond à la réponse d'un dispositif esclave 2 au moment où ce dernier, après être entré dans le champ d'action du dispositif maître, quittance son inscription.

La figure 3 illustre plus en détails le bloc d'entête 5 de la trame de codage. Ce bloc d'entête comporte deux fois quatre bits de contrôle qui seront référencés par N pour NEXT et A pour ACTU. A l'initialisation du système maître, lorsqu'aucun dispositif esclave 2 ne se trouve dans le rayon d'action du champ émis, la valeur de N est initialisée à 1 par exemple et la valeur de ACTU à 0.

Le dispositif maître 1 transmet alors à une fréquence déterminée, par exemple tous les trentième de secondes, des entêtes 5 contenant les valeurs de NEXT et ACTU. Au moment où le premier dispositif esclave entre dans le champ radiant émis et devient actif, à réception de l'entête, il sauve la valeur de NEXT dans un registre interne, initialise le bit 10 de l'entête à une valeur prédéterminée et transmet au dispositif maître une entête 5 qui fait office de quittance d'inscription. Dès la transmission de cette quittance d'inscription, il cesse toute transmission et se met dans un état d'attente d'une commande de la part du dispositif maître 1. Le dispositif maître à réception de la quittance du dispositif esclave 2 incrémente la valeur de NEXT N d'une unité et sait en conséquence qu'un dispositif esclave référencé par NEXT - 1 est présent dans son champ d'action. Lorsque le dispositif maître veut établir un dialogue avec un dispositif esclave 2, il initialise la valeur de ACTU au numéro temporaire attribué à ce dispositif esclave et transmet une commande. Le dispositif esclave, chaque fois qu'il reçoit une commande, commence par comparer la valeur de ACTU à celle qu'il a sauvée dans son registre interne au moment de son inscription. Si la valeur d'ACTU transmise correspond à la valeur mémorisée, le dispositif exécute la commande, dans le cas contraire, il ignore la commande. Il est important de noter qu'à chaque transmission de commande de la part du dispositif maître, la valeur de NEXT est transmise et qu'elle est différente de celle d'ACTU de sorte qu'à tout moment un nouveau dispositif esclave peut entrer dans le champ d'action et provoquer l'incrément de la valeur NEXT en sauvegardant cette dernière dans un registre interne puis en transmettant sa quittance d'inscription. Un nouveau dispositif esclave peut donc s'inscrire à tout moment, même lors de l'émission d'une commande destinée à un autre dispositif esclave présent. Il est donc de ce fait possible grâce à ce double adressage temporaire d'établir une transmission cohérente entre le dispositif maître et chacun des dispositifs esclaves actifs. De plus, la transmission du numéro référençant un dispositif esclave, ne se fait que dans le sens maître-esclave et n'est de ce fait pas coûteuse en énergie pour le dispositif esclave. En codant la valeur d'ACTU et de NEXT sur quatre bits, il est possible d'adresser simultanément 14 ou 15 dispositifs esclaves 2 selon les codes utilisés. Le nombre de dispositifs esclaves traités est illimité car les numéros peuvent en tout temps être réattribués à de nouveaux dispositifs esclaves 2 entrant. Ainsi, si la valeur de NEXT vaut 15 et qu'un dispositif esclave 2 entre dans le champ d'action et quittance son inscription, la valeur de NEXT vaut alors à nouveau 1 et ainsi de suite. On notera également que même si un dispositif esclave sort par inadvertance du champ radiant, et donc n'est plus en mesure d'exécuter les commandes émises par le dispositif maître, les commandes émises par le dispositif maître lui étant destiné ne perturbent pas les autres dispositifs esclaves 2 encore présents.

Suivant le type d'application, il est nécessaire d'introduire une redondance pour augmenter la fiabilité du traitement. On peut citer par exemple le cas dans lequel on veut incrémenter ou décrémenter des unités tarifaires contenues dans le dispositif esclave, ce qui nécessite une sécurité accrue par rapport à de simples contrôles d'accès.

On utilise alors une structure du bloc de commande 6 identique à celle illustrée à la figure 4. On réserve 8 bits dans le bloc de commande 6 dont les quatre premiers sont assignés à un facteur de redondance référencé par R. Les quatre derniers bits servent à coder la commande ce qui offre 16 commandes différentes possibles. La valeur de R également codée sur quatre bits peut prendre les valeurs de 0 à 15.

En fonction du type de commande à transmettre au dispositif esclave, le dispositif maître initialisera la valeur R à un certain facteur en fonction de la sécurité voulue, initialisera les valeurs de NEXT et d'ACTU, puis transmettra la commande voulue.

Lorsque le dispositif esclave décode une trame il commence, comme mentionné ci-dessus, par comparer la valeur d'ACTU transmise avec la valeur qu'il a sauvegardée dans son registre interne. Si cette commande lui est destinée, le dispositif esclave décode la valeur R contenue dans le bloc de commandé 14. Si cette valeur est égale à 1, le dispositif exécute la commande et agit en fonction du code de commande reçu. Si au contraire, la valeur de R est supérieure à 1, le dispositif esclave sauve la valeur du code de la commande, et ses éventuels paramètres (adresse, données) dans un circuit de comparaison, et sauve la valeur du facteur R dans un registre interne, puis se remet à 'l'écoute' de commandes lui étant destiné. A chaque nouvelle commande reçue, le dispositif esclave commence par comparer la valeur du code de commande C avec celle sauvée dans le comparateur. En cas d'adéquation, il décrémente la valeur de R sauvée dans son registre d'une unité. Lorsque R vaudra 0, c'est-à-dire au moment où le dispositif esclave 2 aura reçu R fois la même commande, il exécutera cette commande.

On obtient grâce à ceci une transmission dont on peut moduler la redondance en fonction du type d'application envisagée.

La fin du dialogue entre le dispositif maître et un dispositif esclave est réalisée par l'émission d'un code de commande spécifique par le dispositif maître 1 (par exemple un code de commande dont tous les bits sont à 1).

La transmission de bits en série nécessite, particulièrement lorsque des filtres de fréquence sont nécessaires pour avoir la sélectivité et la sensibilité voulue pour une transmission à distance, un codage adéquat pour assurer une transmission efficace. Ceci exclut un codage des bits par tout ou rien qui a pour conséquence que les valeurs extrêmes en ce qui concerne la fréquence varient d'autant plus que les mots à transmettre sont plus longs. Les codages connus MANCHESTER et CDP ont la particularité de ne varier la fréquence qu'entre f et 2f quelque soit le contenu du mot binaire transmis. Par exemple à 125 kHz la représentation d'un bit nécessite 64 cycles de la porteuse. Le codage MANCHESTER divise en deux moitiés de 32 cycles avec une transition au milieu dont le sens détermine la valeur du bit (1 ou 0). Ce type de codage pose cependant un problème énergétique dans la mesure où pour la représentation d'un bit le signal ne sera modulé que pendant la moitié du cycle, et qu'en conséquence le dispositif esclave ne pourra extraire d'énergie et donc fournir un signal d'horloge (CLK) que pendant la moitié du temps, limitant de ce fait la distance maximum entre un dispositif esclave et le dispositif maître. Pour remédier à cet inconvénient le demandeur propose un type de codage illustré à la figure 5. Ce codage permet de représenter un bit en divisant le nombre de cycles de la porteuse nécessaire à la représentation d'un bit en huit subdivisions égales. Ainsi, toujours à 125 kHz on subdivisera les 64 cycles nécessaires à la représentation d'un bit en 8 subdivision de 8 cycles chacune. Pour représenter un 0 le signal sera modulé durant sept subdivisions (m=7) et la représentation d'un 1 se fera par la modulation durant six subdivisions (m=6). On notera que ce choix est arbitraire et que l'on pourrait de représenter un 0 par la modulation durant 6 subdivisions et un 1 par la modulation du signal pendant 7 subdivisions. Ce type de codage est utilisable quelle que soit la fréquence de travail choisie, seul le rapport entre le nombre de cycles durant lequel le signal est modulé et le nombre de cycles total nécessaire à la représentation d'un bit étant significatif. En conséquence ce type de codage permet d'augmenter l'énergie à disposition des circuits électroniques tout en permettant l'extraction aisée d'un signal d'horloge. Grâce à ce codage, le dispositif esclave peut travailler à une plus grande distance du dispositif maître que dans le cas ou l'on utilise un codage traditionnel.

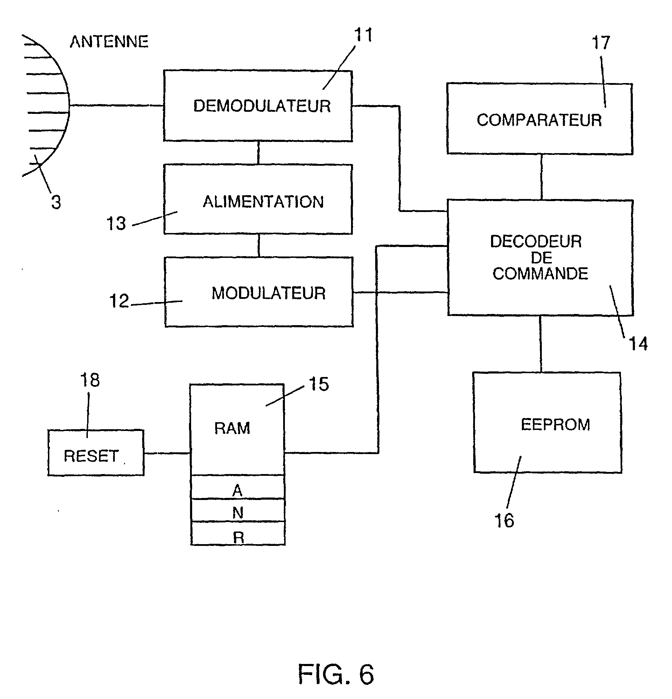

La figure 6 illustre de façon schématique les différents éléments nécessaires au fonctionnement du dispositif esclave 2. La réalisation finale de ces circuits importe peu, le dispositif esclave pouvant être fabriqué en utilisant diverses technologies selon le degré de miniaturisation souhaité.

Le dispositif esclave 2 comprend une antenne 3 non directive dont la fonction est double. Elle permet d'une part de recevoir et de transmettre les signaux vers le dispositif maître 1, et, d'autre part, elle est capable d'extraire du champ alternatif (porteuse) émis par le dispositif maître 1, l'énergie nécessaire à l'alimentation des circuits du dispositif esclave 2. Le dispositif esclave 2 comporte une partie analogique dans laquelle on trouve les éléments suivants : un démodulateur 11 capable d'extraire de la porteuse modulée le signal codé portant l'information transmise par le dispositif maître 1, un modulateur 12 permettant de modifier le champ radiant de manière à ce que la perturbation codée soit détectable par le dispositif maître 1 et un circuit d'alimentation 13 autonome dépendant de la puissance extraite du champ radiant. Le dispositif comporte encore une unité logique ou décodeur de commande 14 qui permet à réception d'une commande de déterminer et de déclencher les actions à effectuer dans le dispositif esclave 2, comme par exemple la lecture ou l'écriture d'un byte dans une zone de la mémoire. Une zone de mémoire volatile 15 comportant au moins deux registres destinés à recevoir de façon temporaire des adresses transmises par le dispositif maître. Une zone de mémoire 16 non volatile avec ou sans protection est agencée de façon à assurer le stockage d'informations internes durables comme des attributs de configuration ou des données relatives au détenteur du dispositif. On utilisera de préférence pour ce type de mémoire une cellule de mémoire EEPROM. Le dispositif esclave 2 comporte en outre un circuit de comparaison ou comparateur 17 recevant d'une part, des informations provenant de la commande émise par le dispositif maître 1 et, d'autre part, des informations provenant de la mémoire interne 15,16 du dispositif esclave. Un élément de remise à zéro 18 des fonctions permet d'annuler les adresses inscrites dans les registres de la zone de mémoire volatile 15, par exemple au moment de la mise *sous* tension (power on reset). Enfin un circuit d'interface analogique (non représenté permet de transformer les signaux binaires du modulateur 12 en signaux électromagnétiques au niveau de l'antenne 3 et inversement vers le démodulateur 11. Les éléments décrits ci-dessus sont suffisants pour la mise en oeuvre des étapes du procédé incombant au dispositif esclave.

Dans une réalisation préférée du dispositif esclave, tous les éléments décrits ci-dessus, à l'exception de l'antenne, seront logés dans un circuit intégré monolithique. L'antenne 3 et le circuit intégré 4 seront encapsulés dans un support mince et souple au format d'une carte de crédit (comme illustré schématiquement à la figure 1).

Dans le but de réduire les coûts de fabrication de la carte sans contact, il est prévu de réaliser le circuit intégré 4 sous forme modulable avec plusieurs blocs fonctionnels, de telle sorte que quelle que soit l'application envisagée la carte sans contact soit toujours réalisée de la même façon. Ce n'est qu'à la livraison du dispositif que la carte sera configurée en fonction de l'application à laquelle elle est destinée. On utilisera pour ce faire certains bits de la mémoire non volatile EEPROM pour aiguiller irréversiblement des signaux vers certains blocs fonctionnels. De plus dans le but de réduire la consommation du dispositif et donc de ce fait d'en augmenter la portée utile, on déconnectera non seulement les signaux parvenant aux blocs fonctionnels non utilisés, mais également l'alimentation de ces blocs fonctionnels.

## Revendications

1. Procédé de gestion d'accès concurrents entre un dispositif maître (1) émetteur/lecteur et plusieurs dispositifs esclaves (2) récepteur/transmetteur entrant successivement ou résidant dans le champ d'action du dispositif maître destiné à garantir la transmission bi-directionnelle d'informations entre le dispositif maître et chacun des dispositifs esclaves présents de façon cohérente, le procédé comportant les étapes suivantes :
• émission répétitive par le dispositif maître (1) à un intervalle de temps déterminé d'une trame comprenant au moins une entête (5) dont la structure comporte au moins deux valeurs d'adressage temporaire, NEXT et ACTU de valeur différente,
• entrée d'un dispositif esclave (2) dans le champ d'action du dispositif maître (1) et activation de ce dernier,
• réception par le dispositif esclave (2) de la trame émise, décodage et sauvetage de la valeur de NEXT dans une mémoire volatile du dispositif esclave,
• émission d'une quittance d'inscription par le dispositif esclave vers le dispositif maître,
• incrément de la valeur de NEXT par le dispositif maître (1) à réception de la quittance d'inscription,
• émission par le dispositif maître d'une dite trame comprenant une valeur de ACTU initialisée à une valeur correspondant à un dispositif esclave inscrit et auquel une commande est destinée,
• comparaison par le dispositif esclave de la valeur ACTU transmise à celle sauvée dans sa mémoire et décodage et exécution de la commande seulement en cas d'égalité de ces deux valeurs,
• répétition des étapes ci-dessus jusqu'à l'émission d'une commande de fin de dialogue par le dispositif maître (1).

2. Procédé selon la revendication 1, caractérisé par le fait que la trame émise par le dispositif maître comporte une troisième valeur de redondance R permettant de fixer le nombre de fois que le dispositif esclave doit recevoir la même commande avant de l'exécuter; ainsi il comporte les étapes supplémentaires suivantes si la troisième valeur de redondance R est supérieure à 1 :
• sauvetage par le dispositif esclave de la valeur de redondance R dans une mémoire volatile et sauvetage du code de la commande dans un circuit de comparaison,
• diminution de la valeur de redondance R d'une unité à réception d'une commande identique,
• exécution de la commande lorsque la valeur de redondance R est égale à zéro.

3. Procédé selon l'une des revendications précédentes, caractérisé par le fait que les valeurs de NEXT et de ACTU sont codées sur quatre bits permettant de ce fait le traitement de quinze dispositifs esclaves simultanément.

4. Procédé selon l'une des revendications précédentes, caractérisé par le fait que le codage des informations binaires lors de la transmission des données par le dispositif maître ou le dispositif esclave se fait par au moins huit subdivisions du nombre de cycles de la porteuse nécessaire à la représentation d'un bit et que le signal est modulé durant sept subdivisions pour représenter une valeur binaire égale à 1 et durant six subdivisions pour représenter une valeur binaire égale à 0.

5. Système permettant l'échange de données de façon cohérente entre un dispositif maître (1) et une pluralité de dispositifs esclaves (2) selon le procédé de la revendication 1, chaque dispositif esclave (2) comportant au moins les éléments suivants : une mémoire volatile (15) contenant les adresses temporaires d'inscription et de sélection; un dispositif de comparaison (17) permettant de comparer des informations contenues dans la commande reçue et des informations provenant de la mémoire (15,16) du dispositif; une remise à zéro (18) des fonctions pour annuler les informations sauvées dans la mémoire volatile (15); un modulateur (12) capable de modifier le champ radiant de manière à ce que la perturbation codée devienne détectable par le dispositif maître (1); un démodulateur (11) capable d'extraire de la porteuse modulée le signal codé portant l'information émise par le dispositif maître (1); un circuit d'interface analogique transformant les signaux binaires en signaux électromagnétiques au niveau d'une antenne et inversement vers le démodulateur, et un circuit d'alimentation autonome (13).

6. Système selon la revendication 5, caractérisé par le fait que les composants (11,12,13,14,15,16,17,18) du dispositif esclave (2), à l'exception de l'antenne, sont logés dans un circuit intégré monolithique (4).

7. Système selon la revendication 6, caractérisé par le fait que l'antenne (3) des dispositifs esclaves (2) reçoit les signaux et extrait l'énergie induite du champ alternatif émis par le dispositif maître (1) et par le fait que le circuit intégré (4) et l'antenne (3) sont encapsulés dans un support mince en résine synthétique, type carte de crédit.

8. Système selon l'une des revendications 6 à 7, caractérisé par le fait que le drcuit intégré (4) est réalisé de façon modulable avec des blocs fonctionnels dont on peut configurer l'alimentation aussi bien en signaux qu'en énergie.

## Patentansprüche

1. Verfahren zur Verwaltung konkurrierender Zugänge zwischen einer Master-Sende- und Lese (1) und mehreren nacheinander in das Wirkungsfeld der Mastervorrichtung eintretenden oder sich darin befindenden Slave-Empfangs- und Übertragungsvorrichtungen (2), dazu bestimmt, die beidseitige Datenübertragung zwischen der Mastervorrichtung und jeder der gegenwärtigen Slavevorrichtungen in kohärenter Weise zu garantieren, und die folgenden Schritte umfassend:
• durch die Mastervorrichtung (1) in bestimmten zeitlichen Abständen wiederholtes Aussenden eines zumindest ein Titelfeld (5) umfassenden Datenübertragungsblocks, dessen Struktur zumindest zwei unterschiedlich hohe Werte, NEXT und ACTU, einer vorübergehenden Adressierung umfasst,
• Eintreten einer Slavevorrichtung (2) in das Wirkungsfeld der Mastervorrichtung (1) und Aktivierung der letzteren,
• Empfang des ausgesendeten Datenübertragungsblocks durch die Slavevorrichtung (2), Dekodierung und Speicherung des NEXT-Wertes in einem flüchtigen Speicher der Slavevorrichtung,
• Aussenden einer Eintragungsquittung von der Slavevorrichtung zur Mastervorrichtung,
• Inkrement des NEXT-Wertes durch die Mastervorrichtung (1) bei Empfang der Eintragungsquittung,
• durch die Mastervorrichtung Aussenden eines der benannten Datenübertragungsblöcke, der einen ACTU-Wert umfasst, der mit einem Wert initialisiert ist, der einer eingetragenen Slavevorrichtung entspricht, der ein Befehl bestimmt ist,
• durch die Slavevorrichtung Vergleich des dieser übermittelten ACTU-Wertes mit dem in seinem Speicher gespeicherten Wert, sowie Dekodierung und nur bei Gleichheit dieser beiden Werte Ausführung des Befehls,
• Wiederholung der obigen Schritte bis zur Aussendung eines Dialogabbruchbefehls durch die Mastervorrichtung (1).

2. Verfahren gemäss Anspruch 1, **dadurch gekennzeichnet**, dass der von der Mastervorrichtung ausgesendete Datenübertragungsblock einen dritten oder Redundanzwert R umfasst, der es gestattet festzulegen, wieviele Male die Slavevorrichtung den gleichen Befehl empfangen muss, bevor sie ihn ausführt; somit umfasst es die folgenden zusätzlichen Schritte, sofern der dritte oder Redundanzwert R grösser als 1 ist:
• durch die Slavevorrichtung Speicherung des Redundanzwertes R in einem flüchtigen Speicher und Speicherung des Befehlskodes in einem Vergleichskreis,
• bei Empfang eines identischen Befehls Verminderung des Redundanzwertes R um eine Einheit,
• Ausführung des Befehls, wenn der Redundanzwert gleich null ist.

3. Verfahren gemäss einem der vorangehenden Ansprüche, **dadurch gekennzeichnet**, dass die Werte von NEXT und ACTU mit vier Bits kodiert sind, wodurch es ermöglicht wird, fünfzehn Slavevorrichtungen gleichzeitig zu behandeln.

4. Verfahren gemäss einem der vorangehenden Ansprüche, **dadurch gekennzeichnet**, dass die Kodierung der Binärdaten bei Datenübermittlung durch die Master- oder Slavevorrichtung durch zumindest acht Unterteilungen der Zahl der Trägerfrequenzperioden geschieht, die erforderlich sind, um ein Bit darzustellen, und dass das Signal während sieben Unterteilungen moduliert wird, um einen binären Wert von 1 darzustellen, aber während sechs Unterteilungen, um einen binären Wert von 0 darzustellen.

5. System, das den Datenaustausch zwischen einer Mastervorrichtung (1) und einer Mehrzahl von Slavevorrichtungen (2) in kohärenter Weise gemäss dem Verfahren des Anspruchs 1 gestattet, wobei jede Slavevorrichtung (2) zumindest die folgenden Elemente umfasst: einen flüchtigen Speicher (15), der die zeitweiligen Eintragungs- und Auswahladressen enthält; eine Vergleichsvorrichtung (17), die es gestattet, die im empfangenen Befehl enthaltenen Daten mit den vom Speicher (15, 16) der Vorrichtung kommenden Daten zu vergleichen; eine Nullrückstellung (18) der Funktionen, um die im flüchtigen Speicher (15) gespeicherten Daten zu löschen; einen Modulator (12), der in der Lage ist, das Strahlenfeld so abzuwandeln, dass die kodierte Störung durch die Mastervorrichtung (1) erkennbar wird; einen Demodulator (11), der in der Lage ist, das die von der Mastervorrichtung (1) ausgesendeten Daten tragende, kodierte Signal aus der modulierten Trägerfrequenz herauszuziehen; eine Analogschnittstelle, die die binären Signale zu elektromagnetischen Signalen an einer Antenne und umgekehrt zum Demodulator hin umwandelt, und einen unabhängigen Versorgungskreis (13).

6. System gemäss Anspruch 5, **dadurch gekennzeichnet**, dass die Bestandteile (11, 12, 13, 14, 15, 16, 17, 18) der Slavevorrichtung (2) mit Ausnahme der Antenne in einer monolithischen integrierten Schaltung (4) untergebracht sind.

7. System gemäss Anspruch 6, **dadurch gekennzeichnet**, dass die Antenne (3) der Slavevorrichtungen (2) aus dem von der Mastervorrichtung (1) ausgesendeten Wechselfeld die Signale empfängt und die induzierte Energie herauszieht, und dadurch, dass die integrierte Schaltung (4) und die Antenne in einem dünnen Kunststoffträger von der Art einer Kreditkarte eingekapselt sind.

8. System gemäss einem der Ansprüche 6 und 7, **dadurch gekennzeichnet**, dass die integrierte Schaltung (4) modular mit Bauteilen ausgeführt ist, aus denen sowohl die Signal- als auch die Energieversorgung gebildet werden kann.

## Claims

1. Process for the management of concurrent access between a master emitter/reader device (1) and plural receiver/transmitter slave devices (2) entering successively into or remaining in the field of action of the master device adapted to guarantee the bidirectional transmission of data between the master device and each of the slave devices present, in a coherent manner, comprising the steps of:
• Repetitive emission by the master device (1) at a predetermined frequency of a frame comprising at least a heading (5) whose structure comprises at least two temporary address values, NEXT and ACTU of which the value is different,
• entry of a slave device (2) into the field of action of the master device (1) and actuation of this latter,
• reception by the slave device (2) of the frame emitted, decoding and saving the value NEXT in an internal register of the slave device,
• emission of an acknowledgement of inscription by the slave device to the master device,
• counting up the value of NEXT by the master device (1) upon reception of the acknowledgement of inscription,
• emission by the master device (1) of said heading comprising the initialized value of ACTU at a corresponding value to an inscribed slave device and to which a command is directed,
• comparison by the slave device of the transmitted value ACTU to that saved in its register and decoding and executing the command only in case of equality of these values,
• repetition of the aforesaid steps until the emission of an end of dialogue command by the master device (1).

2. Process according to claim 1, **characterized in that** the structure of the frame emitted by the master device comprises a third temporary address value R permitting fixing the number of times the slave device must receive the same command before executing it, thus it comprises the following supplemental steps if R is greater than 1:
• Saving by the slave device of the value of R in an internal register and saving the code of command in a comparison circuit,
• decrease of the R value by one unit upon reception of an identical command,
• execution of the command when R is equal to zero.

3. Process according to one of the preceding claims, characterized by the fact that the value of NEXT and of ACTU are coded in four bits permitting in this way the processing of fifteen slave devices simultaneously.

4. Process according to one of the preceding claims, characterized by the fact that coding of the binary information during transmission of data by the master device or the slave device takes place in at least eight subdivisions of the number of cycles of the carrier necessary for the representation of one bit and that the signal is modulated during seven subdivisions to represent a binary value equal to 1 and during six subdivisions to represent a binary value equal to 0.

5. System for exchanging data in coherent manner between a master device (1) and plural slave devices (2) according to the process of claim 1, each slave device (2) comprising at least the following elements : a volatile memory (15) containing the temporary addresses for inscription and selection; a comparison device (17) permitting comparing data contained in the command received and data from the memory (15, 16) of the device; a zero reset (18) of the functions to cancel the data saved in the volatile memory (15); a modulator (12) capable of modifying the radiation field such that the coded disturbance will become detectable by the master device; a demodulator (11) capable of extracting from the modulated carrier the coded signal carrying the information emitted by the master device (1); an analogical interface circuit transforming the digital signal into electromagnetic signal on the antenna and conversely toward the demodulator, and an autonomous supply circuit (13).

6. System according to claim 5, **characterized in that** the components (11,12,13,14,15,16,17,18) of the slave device (2), except the antenna, are disposed in a monolithic integrated circuit (4).

7. System according to claim 6, characterized by the fact that the antenna (3) of the slave devices (2) receives signals and extracts the induced energy of the alternating field emitted by the master device (1) and by the fact that the integrated circuit (4) and the antenna (3) are encapsulated in a thin support of synthetic resin, of the credit card type.

8. System according to claims 6 and 7, characterized by the fact that the integrated circuit (4) is made in a modulable fashion with functional blocks from which can be configured the supply both for signals and for energy.
